# EUROPEAN PATENT APPLICATION

(11) **EP 4 628 677 A1**
(43) Date of publication of application: **08.10.2025**
(21) Application number: 23898128.6
(22) Date of filing: 08.11.2023
(51) Int. Cl.: E04G 19/00, E04G 9/10

(54) **METHOD FOR PEELING FILM FROM MOLD RELEASE FILM**

(30) Priority: 02.12.2022 KR 20220166714
(71) Applicant: Lee, Hodon, Pyeongtaek-si, Gyeonggi-do 17700 (KR)
(72) Inventor: Lee, Hodon, Pyeongtaek-si, Gyeonggi-do 17700 (KR)
(74) Representative: Abel & Imray LLP
(86) International application number: PCT/KR2023/017880
(87) International publication number: WO 2024/117596

(57) **Abstract**

The present invention relates to a method for peeling a film from a release film and relates to a method for peeling a film from a mold release film, in which a peeling tool (300) provided with a peeling end (320) having a corner formed on one side thereof is provided, and in a state where the peeling tool (300) is inclined at a predetermined angle, the corner formed at the peeling end (320) is positioned at the edge of a film set (100) and then is pushed toward the central portion of the film set (100), so that the film (120) laminated on a top layer is pushed from the edge of the film set (100) and is then lifted therefrom to form a gripping point, and by gripping the gripping point, the film (120) laminated on the top layer is detached from the film set (100).

## Description

### Technical Field

The present disclosure relates to a peeling method for easily detaching a film one by one from a top layer of a mold release film formed as a film set that is formed by laminating films.

### Background Art

As a mold used in a construction work site, a mold on which a coating agent is applied so as to protect a surface of the mold has been proposed. In this situation, there are problems that a unit price of the mold increases due to formation of a coating layer by spraying the coating agent, and that the performance of the mold decreases when the coating layer is damaged.

In order to solve the problems described above, a mold having a protective film attached to a surface of the mold has been proposed. However, since the protective film described above is formed as a single layer, a period in which the protective film is capable of being used is short, so that the protective film is required to be replaced frequently, thereby causing inconvenience in repeated reuse of the mold.

In order to solve the problem described above, a mold release film has been proposed. The mold release film has a configuration in which a film is laminated as a film set, the film set is attached to a mold, and the mold is capable of being used in a subsequent use by removing a damaged film one by one when the film exposed to a top layer is damaged.

### Disclosure

### Technical Problem

In a mold release film formed as a film set by laminating a film, when a damaged film is to be detached from the film set while the mold release film is in a state in which the mold release film is attached to a mold, a method in which one sheet of film to be detached is gripped by the hand and then is detached from the film set is used. However, since the laminated films are in a state in which the laminated films are adhered to each other by an adhesive agent having a relatively strong adhesive force, a gap is not formed between the laminated films, so that there is a problem that it is not easy to remove the laminated films one by one. Therefore, in the present disclosure, a method for easily removing a damaged film while a mold release film is in a state in which the mold release film is attached to a mold is proposed.

### Technical Solution

In order to achieve the objective described above, according to the present disclosure, there is provided a method in which a peeling tool having a corner formed on a distal end thereof is provided and the corner is positioned on an edge of a film set and then the corner is pushed so that a film laminated at a top layer is lifted, thereby being capable of gripping a lifted point and detaching the film from the film set.

### Advantageous Effects

According to the present disclosure, the damaged film is capable of being easily detached from the mold release film that is attached to the mold. As a result, the present disclosure may help to attach the mold release film to the mold and to conveniently use the mold release film.

### Description of Drawings

FIG. 1 is an exemplary view illustrating a release film according to the present disclosure,
FIG. 2 is an exemplary view illustrating a use state of the release film according to the present disclosure,
FIG. 3 and FIG. 4 are exemplary views illustrating an example of a peeling tool used in the present disclosure, and
FIG. 5 to FIG. 8 are exemplary views illustrating a process of peeling a film with the peeling tool according to the present disclosure.

### Mode for Invention

In the present disclosure, a method for peeling a film from a mold release film is provided. In the method, a peeling tool having a first side thereof provided with a peeling end that has a corner is provided. Furthermore, in a state in which the peeling tool is inclined at a predetermined angle, the corner formed on the peeling end is positioned on an edge of a film set and then the peeling tool is pushed toward a central portion of the film set, a film laminated on a top layer of the film set is pushed and lifted from the edge of the film set so that a gripping point is formed, and the gripping point is gripped and the film laminated on the top layer of the film set is detached from the film set.

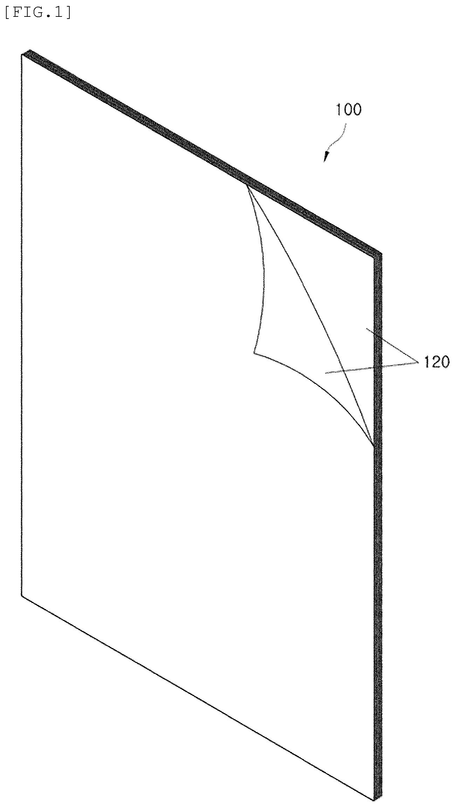

Hereinafter, the present disclosure will be described in detail with reference to the accompanying drawings which are FIG. 1 to FIG. 8.

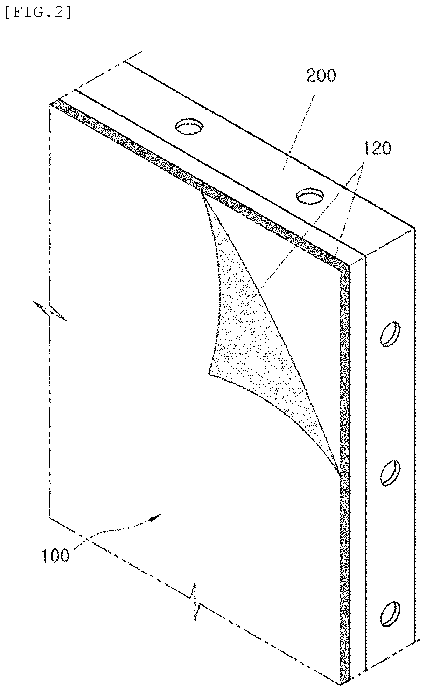

FIG. 1 is an exemplary view illustrating a release film according to the present disclosure, and FIG. 2 is an exemplary view illustrating a state in which the release film according to the present disclosure is attached to a mold.

As illustrated in the drawings, a mold release film according to the present disclosure includes a film set 100 formed by laminating a film 120. The film 120 is formed of a synthetic resin material, and is formed by cutting the synthetic resin material to a predetermined area. A material having a predetermined strength, being capable of being easily bent, and being capable of being easily detached from concrete is selected as a material of the film 120. Such a film 120 is formed in a quadrangular shape or a rectangular shape according to a shape of a mold used in a construction work site, but the shape of the film 120 is not limited thereto.

The film 120 is laminated as a plurality of layers. The lamination of the film 120 may be performed by using an adhesive agent, and the adhesive agent having a characteristic that the film 120 is capable of being attached to and detached from the adhesive agent. Therefore, as the adhesive agent is applied to a surface of the film 120, a plurality of films 120 is capable of being laminated with each other, and an individual film 120 is capable of being detached from the film set 100 in a desired situation.

In the laminated films 120, the adhesive agent may be applied to a lower surface of the film 120 disposed on an upper layer. In this situation, the adhesive agent is not left on an upper surface of the lower layer film 120 that is exposed when the upper layer film 120 is detached from the lower layer film 120, so that foreign substances may be prevented from being attached to the surface of the film set 100.

The film set 100 as described above is attached to a surface of the mold. The film set 100 is used by being attached to the surface of the mold by a bonding agent or the adhesive agent. When the film set 100 is attached to the mold, the surface of the mold is protected. Furthermore, when the mold is separated from concrete after curing of the concrete is finished, the mold is easily separated from the concrete due to material characteristics of the film 120.

Meanwhile, in a state in which the film set 100 is attached to the surface of the mold, the mold is mounted, concrete is placed in the mold and cured, and the mold is separated from the concrete and is reused. In this process, a surface of the film set 100 that has been in contact with the concrete may be contaminated or damaged. Therefore, the film 120 contaminated or damaged as described above is detached from the film set 100. As the film 120 is laminated as the plurality of layers so that the film set 100 is formed, the performance of the film set 100 is maintained when only the damaged film 120 is removed, so that the mold is capable of being reused by removing the film contaminated or damaged during the process of reusing the mold.

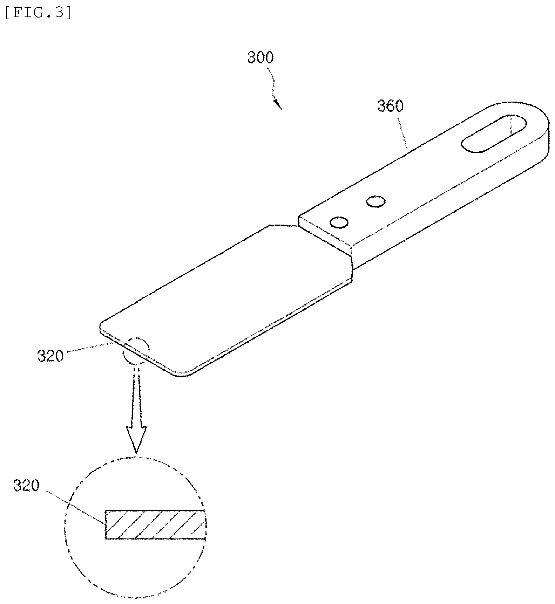

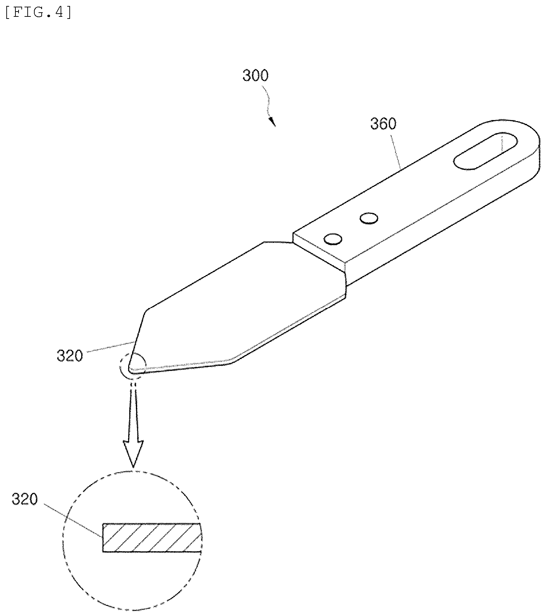

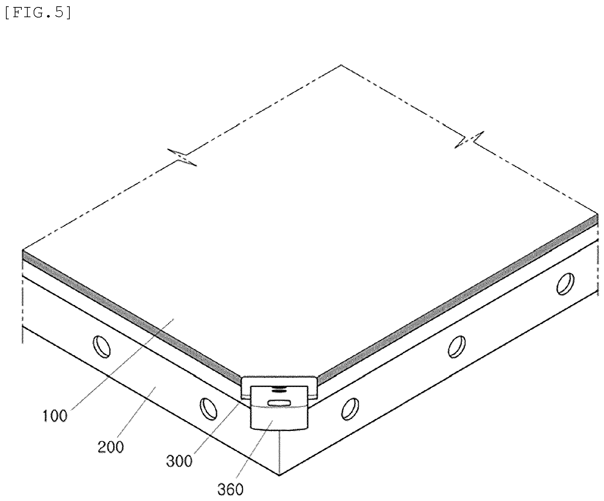

FIG. 3 and FIG. 4 are exemplary views illustrating an example of a peeling tool used in the present disclosure, and FIG. 5 to FIG. 8 are exemplary views illustrating a process of peeling a film with the peeling tool according to the present disclosure.

In the present disclosure, the film 120 is removed from the film set 100 by using a peeling tool 300, the film set 100 being attached to a mold 200.

The peeling tool 300 has a first side thereof provided with a peeling end 320 having a corner. As required, a structure in which a handle 360 is formed on a second side of the peeling tool 300 may be provided. When the handle 360 is formed, the entire portion of the peeling tool 300 excluding the handle 360 may be formed in a flat shape, but the structure of the peeling tool 300 is not limited to the structure described above as long as the peeling tool 300 has the peeling end 320 having the corner.

The corner formed on the peeling end 320 is formed by connecting two surfaces, and an angle formed by the two surfaces may be approximately 45 degrees to 100 degrees. Preferably, the angle may be 90 degrees or an angle close to 90 degrees.

When the film 120 is intended to be removed from the film set 100, a user grips the handle 360 of the peeling tool 300 by the hand and positions the corner formed on the peeling end 320 on a surface of the film set 100 from an edge of the film set 100 (FIG. 5). Preferably, a point at which the peeling tool 300 is positioned is a position adjacent a corner of the film set 100, but is not limited thereto.

The peeling tool 300 is positioned on the surface of the film set 100 while the peeling tool 300 is in a state in which the peeling tool 300 is inclined at a predetermined angle. Through this, the peeling end 320 is brought into contact with the film 120 such that the corner formed on the peeling end 320 is positioned toward a direction penetrates the film 120 laminated at a top layer.

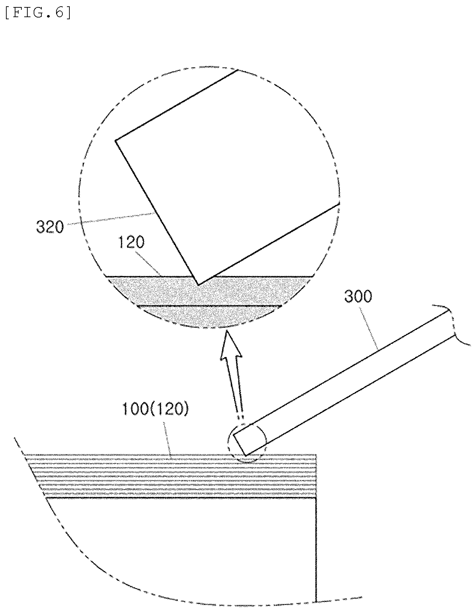

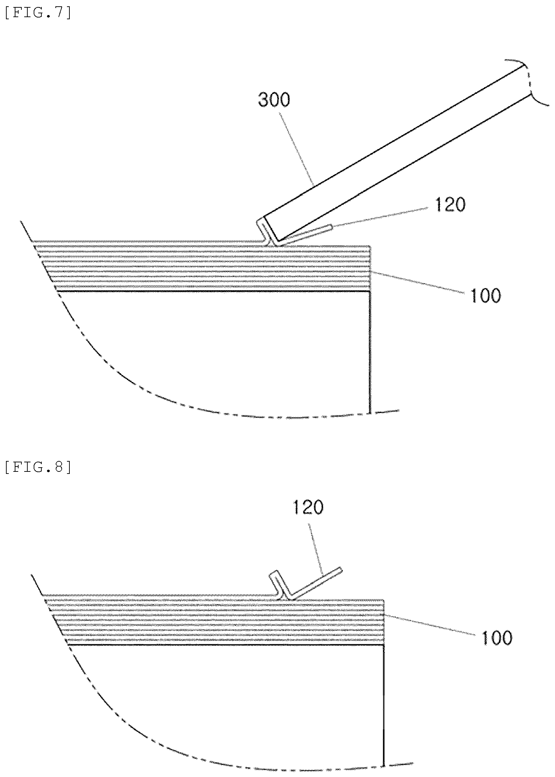

In a state in which the corner formed on the peeling end 320 is positioned at an appropriate point as described above, the peeling tool 300 is pushed toward a central portion of the film set 100. Accordingly, while the corner formed on the peeling end 320 is stuck to a predetermined depth from the surface of the film 120 laminated at the top layer (FIG. 6), the film 120 laminated at the top layer is pushed. As a result, the film 120 laminated at the top layer is pushed and lifted from the film 120 laminated below the film 120 at the top layer (FIG. 7 and FIG. 8). A portion lifted as described above becomes a gripping point.

Here, when the angle of the corner formed on the peeling end 320 is excessively small, a structure similar to a blade is formed. In this situation, a phenomenon in which the peeling end 320 is stuck to an excessive depth on the film 120 laminated at the top layer occurs. As a result, the film 120 formed on the top layer is not pushed, and the film 120 is not lifted and then is cut, so that the gripping point is not properly formed. Conversely, when the angle of the corner formed on the peeling end 320 is excessively large, the corner formed on the peeling end 320 is not stuck to an appropriate depth on the surface of the film 120 laminated at the top layer. Therefore, since an appropriate friction force is not secured between surfaces of each film 120, so that the film 120 laminated at the top layer is not pushed. Eventually, the gripping point is not formed properly.

When the gripping point is formed properly, the gripping point is gripped and pulled by the finger. Accordingly, the film 120 laminated at the top layer is detached from the film 120 laminated below the film 120 at the top layer, and the film 120 laminated at the top layer is removed. The film 120 is capable of being detached one by one from the film set 100.

Through the process described above, the damaged film 120 is capable of being easily removed from the film set 100 that is attached to the mold 200, so that the mold 200 is capable of being repeatedly used smoothly.

### [sequence Listing Free Text]

[Description of Reference Numerals]
100: Film set, 120: Film,
200: Mold,
300: Peeling tool, 320: Peeling end,
360: Handle.

## Claims

1. A method for peeling a film from a mold release film, the method comprising:
providing a peeling tool (300) having a first side thereof provided with a peeling end (320) that has a corner;
positioning the corner formed on the peeling end (320) on an edge of a film set (100) while the peeling tool (300) is in a state in which the peeling tool (300) is inclined to a predetermined angle, and then pushing the peeling tool (300) toward a central portion of the film set (100) so that a film (120) laminated at a top layer is pushed and lifted from the edge of the film set (100), thereby forming a gripping point; and
gripping the gripping point and then detaching the film (120) laminated at the top layer from the film set (100).

2. The method of claim 1, wherein the peeling tool (300) is configured such that the corner formed on the peeling end (320) is positioned on a position adjacent a corner of the film set (100) and then is pushed.
